# DEMANDE DE BREVET EUROPEEN

(11) **EP 1 344 577 A1**
(43) Date de publication de la demande: **17.09.2003**
(21) Numéro de dépôt: 03360038.8
(22) Date de dépôt: 11.03.2003
(51) Int. Cl.: B07C 5/36, B65G 69/16, B07B 13/16

(54) **Dispositif de calibrage et/ou triage de produits, tels que des fruits**

(30) Priorité: 11.03.2002 FR 0203037
(71) Demandeur: Caustier France Société Anonyme, 66000 Perpignan (FR)
(72) Inventeur: Caustier, Claude, 66000 Perpignan (FR)
(74) Mandataire: Rhein, Alain

(57) **Abrégé**

L'invention concerne un dispositif (1) de calibrage et/ou triage de produits, tels que des fruits, comportant au moins une rangée (2) de godets (3) en forme d'une chaîne de transport (4) à circuit bouclé, lesdits godets (3) étant montés pivotants autour d'un axe de rotation horizontal (12) défini sensiblement par leur bord transversal aval (11), par rapport à leur sens de défilement, pour déverser, après calibrage et sous l'impulsion de moyens de commande (14) appropriés, lesdits produits (P) sur un convoyeur d'évacuation (9) au travers d'un tapis de dépose (17) que comporte, solidairement, chaque godet (3).

Ce dispositif est caractérisé par le fait qu'un tapis de dépose (17) comporte une portion d'extrémité (19) venant s'étendre librement au-dessus du godet (3) correspondant, tandis que des moyens de traction (21) sont prévus aptes à mettre sous tension ledit tapis de dépose (17) au moins dans cette portion (19) s'étendant au-dessus du godet (3), lors de la dépose d'un produit (P) dans ce dernier.

## Description

L'invention concerne un dispositif de calibrage et/ou triage de produits, tels que des fruits, comportant au moins une rangée de godets en forme d'une chaîne de transport à circuit bouclé décrivant, entre deux roues de renvoi, un brin de transport horizontal supérieur sous lequel s'étend au moins un convoyeur d'évacuation réceptionnant les produits calibrés, notamment au travers d'un profil de guidage, lesdits godets étant montés pivotants autour d'un axe de rotation horizontal défini sensiblement par leur bord transversal aval, par rapport au sens de défilement dudit brin de transport horizontal supérieur, pour déverser, après calibrage et sous l'impulsion de moyens de commande appropriés, lesdits produits sur le convoyeur d'évacuation correspondant au travers d'un tapis de dépose que comporte, solidairement, chaque godet.

La présente invention trouvera son application dans le domaine du calibrage et/ou triage automatique de produits fragiles, tels que des fruits.

De nombreux produits nécessitent de prendre quelques précautions dans le cadre de leur manipulation, en particulier sur site industriel. Il en est ainsi des fruits, notamment ceux dits « en vert » comme les pommes, mais aussi les tomates, pêches, poires etc... dont il convient d'éviter les chocs, tenant compte que tout fruit talé, même faiblement, pendant le triage, calibrage et la mise sous emballage, devient impropre à la vente dans un très court laps de temps.

Evidemment, l'on a d'ores et déjà imaginé de multiples solutions pour protéger ces produits que sont les fruits contre les chocs éventuels qu'ils seraient susceptibles de subir, en particulier au cours de l'opération de calibrage et/ou triage. Ainsi, le document FR-A- 2.380.826 traite du sujet dans le cadre de perfectionnements apportés à des calibreuses d'un type particulier, faisant appel à un tapis de calibrage continu formé d'une succession de plaques portant chacune une rangée de trous de calibrage. Sur ce tapis sont déposés les fruits, tandis qu'en dessous s'étendent plusieurs tapis continus de convoyage venant réceptionner ces fruits triés en vue de les évacuer, par exemple en direction d'une unité de conditionnement.

L'on connaît, par ailleurs par le document EP-A-0 037 142, un autre type de dispositif de calibrage et/ou triage correspondant, davantage au descriptif du préambule.

Ainsi, le dispositif dont il est question dans ce document, comporte une succession de réceptacles ou godets disposés en rangées, en forme d'une chaîne de transport à circuit bouclé, tenant compte que plusieurs de ces rangées de godets peuvent être juxtaposées transversalement. Un dispositif d'alimentation est à même de venir déposer, individuellement, dans chacun des godets un produit, en l'occurrence un fruit, destiné à subir une opération de calibrage, en particulier par pesée.

Il convient d'observer à ce propos que la chaîne de transport que décrivent les godets vient s'enrouler autour de deux roues de renvoi à axe de rotation horizontal de manière à définir un brin de transport horizontal supérieur et un brin de transport horizontal inférieur. Entre ces derniers, plus particulièrement sous le brin de transport horizontal supérieur, s'étendent des convoyeurs d'évacuation destinés, précisément, à réceptionner les fruits en fonction de leur calibre pour les évacuer vers une unité de conditionnement, par exemple. Ainsi, en fonction du poids du produit transporté, un godet vient, à un endroit précis le long du brin de transport supérieur, se renverser par pivotement autour d'un axe de rotation horizontal transversal pour déverser le produit au droit du convoyeur d'évacuation correspondant à son calibre.

Ce déversement intervient vers l'arrière, vu dans le sens de défilement des godets, c'est à dire par pivotement, sensiblement, autour de son bord transversal aval. Le fruit transporté est accompagné, dans son mouvement, par un tapis de dépose s'étendant, en amont sous le godet, jusqu'à un profil de dépose en forme d'un plan incliné regagnant ledit convoyeur d'évacuation.

Il convient d'observer que selon un premier mode de réalisation décrit dans ce document antérieur, ce tapis de dépose sous-tend, en amont, le godet et comporte son extrémité transversale avale solidaire de l'axe de pivotement de ce dernier. Dans ce cas, il est ménagé au niveau de ce tapis de dépose une ouverture dans laquelle peut venir s'inscrire le fond de forme concave du godet, en particulier lorsque celui-ci est en position de déversement.

Selon un autre mode de réalisation décrit, le tapis de dépose peut être rendu solidaire du bord transversal amont du godet, en particulier au travers de l'opération de moulage de ce dernier lorsqu'il est conçu en matière synthétique. Finalement, il a encore été imaginé de rendre solidaire l'extrémité transversale avale de ce tapis de dépose de l'axe de pivotement du godet et de l'amener à épouser le fond interne de ce dernier, avant de venir retomber au-delà de son bord transversal amont.

En fait, l'on s'aperçoit que si, dans ce type de conception correspondant à l'état de la technique, l'on prend d'énormes précautions dans le cadre du déversement des fruits après calibrage, il n'y en a guère de prise pour venir les déposer dans les godets.

En effet, si les disques, dont est équipé dans ce cas le dispositif d'alimentation, assurent parfaitement le maintien de ces fruits jusqu'à ce qu'ils soient prélevés par les godets, rien ne vient absorber le choc résultant, précisément, de cette rencontre des godets et des fruits. En particulier, même en venant s'étendre dans le fond de ces godets, comme décrit dans le document EP-A-0.037.142, les tapis de dépose ne comportent pas de propriété absorbante suffisante pour éviter, de manière significative, que des fruits soient abîmés lorsqu'ils retombent depuis le dispositif d'alimentation dans le fond des godets.

En fin de compte, la présente invention se veut à même de répondre de manière simple à ce problème, c'est à dire sans qu'il ne soit nécessaire de rendre plus complexe le dispositif de calibrage et/ou de triage par l'adjonction de moyens spécifiques onéreux.

Ainsi, il a été imaginé, dans le cadre d'une première démarche inventive, de faire appel aux moyens existants pour assurer cette fonction d'absorption des chocs résultant de la dépose des fruits dans les godets. Tout particulièrement, l'on a pensé que cette fonction puisse être assurée par le tapis de dépose que comporte chaque godet, en venant le mettre sous tension, tel un hamac, au-dessus de ce godet au moment même où intervient la dépose du fruit dans ce dernier.

En fait, dans une seconde démarche inventive il a été imaginé que d'assurer cette mise sous tension du tapis de dépose d'un godet, tout simplement en l'amenant en coopération avec une surface à coefficient de frottement élevé tentant à ralentir sa progression précisément avant et pendant qu'un godet se présente sous le dispositif d'alimentation.

Ainsi, l'invention concerne un dispositif de calibrage et/ou triage de produits, tels que des fruits, comportant au moins une rangée de godets en forme d'une chaîne de transport à circuit bouclé décrivant, entre deux roues de renvoi, un brin de transport horizontal supérieur sous lequel s'étend au moins un convoyeur d'évacuation réceptionnant les produits calibrés, notamment au travers d'un profil de guidage, lesdits godets étant montés pivotants autour d'un axe de rotation horizontal défini sensiblement par leur bord transversal aval, par rapport au sens de défilement dudit brin de transport horizontal supérieur, pour déverser, après calibrage et sous l'impulsion de moyens de commande appropriés, lesdits produits sur le convoyeur d'évacuation correspondant au travers d'un tapis de dépose que comporte, solidairement, chaque godet, caractérisé par le fait qu'un tapis de dépose comporte une portion. d'extrémité venant s'étendre librement au-dessus du godet correspondant, tandis que des moyens de traction sont prévus aptes à mettre sous tension ledit tapis de dépose, au moins dans cette portion s'étendant au-dessus du godet, lors de la dépose d'un produit dans ce dernier.

Finalement et comme cela ressort d'ores et déjà des explications qui précèdent, la présente invention vient répondre de manière particulièrement efficace au problème posé, puisqu'en prévoyant qu'une portion du tapis de dépose s'étende librement au-dessus d'un godet, le fait de le mettre sous tension lui permet de former, tel un hamac, un matelas amortisseur pour la réception des produits. Dans ces conditions, l'on a, non seulement, résolu le problème des chocs que peuvent subir ces produits lors de leur dépose dans les godets, mais, en outre, ce risque devient d'autant plus faible que la hauteur de chute est plus réduite. En effet, ces produits ne retombent plus immédiatement en fond de godet, mais gagnent cette position progressivement, dès l'instant que la traction exercée sur le tapis de dépose disparaît.

L'invention sera mieux comprise à la lecture de la description qui va suivre s'appuyant sur les dessins ci-joints illustrant un exemple de réalisation.

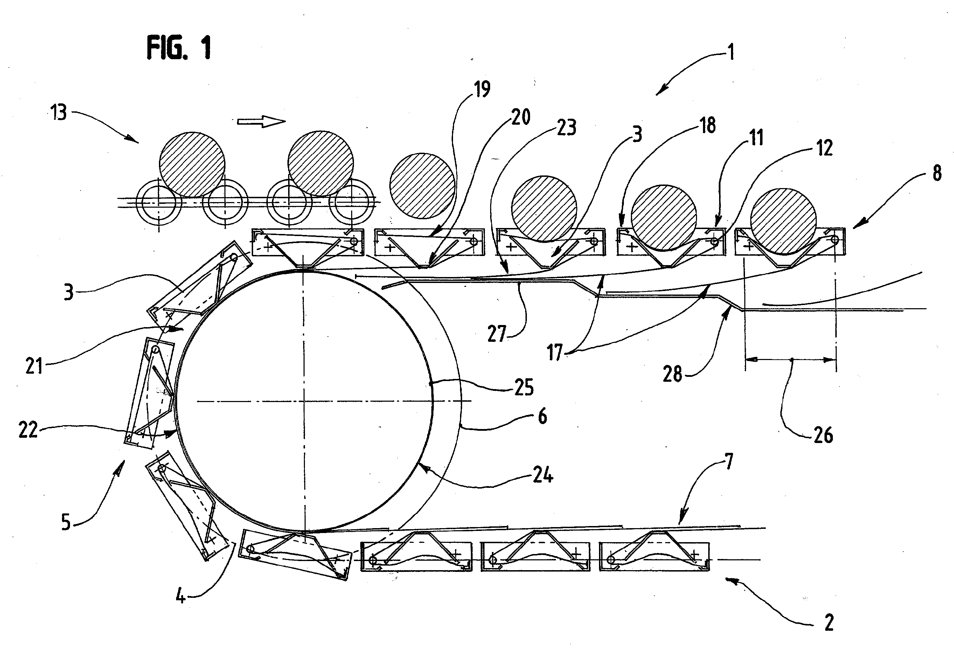

La figure 1 est une représentation schématisée et partielle de la partie amont d'un dispositif de calibrage et/ou triage de produits, en particulier de fruits, conforme à l'invention.

La figure 2 est une représentation similaire à la figure 1 et illustrant une portion du brin de transport supérieur de la chaîne de godets, en phase de dépose d'un produit calibré sur un convoyeur d'évacuation.

La figure 3 illustre de manière schématisée et vue de dessus un godet avec son tapis de dépose selon un exemple de réalisation.

La figure 4 est une représentation schématisée et en élévation de ce godet.

Tel que représenté dans les figures du dessin ci-joint, la présente invention a trait à un dispositif 1 de calibrage et/ou triage de produits P, notamment fragiles, tels que des fruits.

Ce dispositif 1 comporte au moins une rangée 2 de godets 3, ceux-ci étant rendus solidaires par l'intermédiaire de moyens d'entraînement souples 4 de manière à former une chaîne de transport 5 décrivant un circuit bouclé. Dans ce but, les moyens d'entraînement 4 et donc la chaîne de transport 5 vient s'enrouler partiellement autour de deux roues de renvoi horizontales 6 dont seule celle située dans la partie amont du dispositif 1 a été représentée. Ces roues de renvoi 6 se situent, habituellement, dans un même plan horizontal.

Ainsi, cette chaîne de transport 5 et donc les godets 3 décrivent un brin de transport horizontal inférieur 7 et un autre supérieur 8. Sous ce dernier s'étend, dans une direction sensiblement perpendiculaire, au moins un convoyeur d'évacuation 9 venant réceptionner les produits P après calibrage, ceci au travers d'un profil de guidage 10 en forme d'un plan incliné démarrant, sensiblement en-dessous les godets 3 et aboutant, dans sa partie inférieure, audit convoyeur d'évacuation 9. Pour en revenir aux godets 3 et si l'on prend comme référence le sens de défilement du brin de transport supérieur 8 allant donc de la partie amont du dispositif 1 en direction de sa partie aval, ils sont montés pivotants, à hauteur de leur bord transversal aval 11, autour d'un axe de rotation horizontal 12 rendu solidaire, à chacune de ses extrémités, desdits moyens d'entraînement souples 4, par exemple de chaînes.

Par conséquent, après détermination du calibre du produit P ayant été déposé dans un godet 3 au travers d'un dispositif d'alimentation 13 approprié, ce godet 3, du fait de son montage pivotant autour de l'axe de rotation 12, est à même de le déverser sur le convoyeur d'évacuation 9 correspondant, plus particulièrement sur le profil de dépose 10 donnant accès à ce dernier.

Ce déversement et donc le basculement du godet 3 à un instant donné le long du brin de transport supérieur 8 est commandé à l'aide de moyens 14 appropriés que sont, d'une part, un rail de guidage 15 s'étendant au moins sous ce brin 8 et un doigt d'appui 16 dont est équipé chaque godet 3 et qui est susceptible de coopérer avec ce rail. A noter, à ce propos, qu'il n'est pas décrit, ici, le détail de construction de ces moyens de commande 14, ni du principe du triage par pesée, dans la mesure où ils ne sont pas concernés par l'objet de la présente invention. Ils sont par ailleurs à la portée de l'homme du métier et un mode de réalisation en est décrit dans le document EP-A-0 037 142.

En fait, comme cela est parfaitement visible dans les figures des dessins ci-joints, après basculement d'un godet 3 le produit P calibré gagne le profil de dépose 10 au travers d'un tapis de dépose 17 de manière à accompagner, dans sa chute, ledit produit P.

Selon un premier mode de réalisation, ce tapis de dépose 17, de largeur adaptée à un godet 3, peut s'étendre sensiblement depuis le bord transversal aval 11 d'un tel godet 3 au-dessus de ce dernier pour venir retomber, librement, sensiblement au-delà du bord transversal amont 18 de ce dernier.

Toutefois et comme visible dans ces figures, selon un mode de réalisation préférentiel, ce tapis de dépose peut également être attaché par une extrémité, sensiblement au niveau du bord transversal amont 18 pour venir s'étendre, là encore au-dessus du godet 3 pour venir retomber, cette fois, au delà du bord transversal aval 11. Dans ces conditions ce tapis de dépose 17 vient se replier sous le godet 3 pour s'étendre vers l'amont du dispositif 1, soit en sens contraire au défilement de la chaîne de transport 5. Avantageusement, au delà du bord transversal aval 11, le tapis de dépose 17 se replie sous le godet 3 en venant s'enrouler partiellement autour de l'axe de rotation 12 de ce godet 3.

Quoiqu'il en soit, si, sous l'effet du poids du produit P transporté dans un godet 3, voire même sous l'effet de son propre poids, le tapis de dépose 17, dans sa portion 19 s'étendant au-dessus de ce godet 3, vient retomber naturellement en fond 20 de ce dernier, il est prévu, selon l'invention, des moyens de traction 21 qui ont pour effet de mettre sous tension le tapis de dépose 17, du moins dans cette portion 19 s'étendant au-dessus du godet 3, de manière à former un matelas amortisseur, à la manière d'un hamac, pour la réception d'un produit P, précisément lorsque celui-ci vient à être prélevé par un tel godet 3, à hauteur du dispositif d'alimentation 13.

En somme, ces moyens de traction 21 sont conçus aptes à intervenir sensiblement qu'au niveau de cette alimentation des godets 3 en produits P à calibrer.

Avantageusement, lesdits moyens de traction 21 sont définis par une surface adhérente 22 sur laquelle vient reposer la portion 23 du tapis de dépose 17 retombant au-delà du godet 3, ceci avant l'arrivée de ce dernier à hauteur du dispositif d'alimentation 13. Cette surface 22, en venant freiner, ainsi, le tapis de dépose 17 assure, comme indiqué ci-dessus, sa mise sous tension.

Selon un mode de réalisation avantageux et dans la mesure où le dispositif d'alimentation 13 se situe, comme déjà indiqué ci-dessus, immédiatement en partie amont du brin de transport supérieur 8 soit en sortie de la roue de renvoi 6 autour de laquelle viennent s'enrouler les moyens d'entraînement souples 4 maintenant, de part et d'autre, les godets 3, ladite surface adhérente 22 est définie par une roue de freinage 24 montée coaxialement à la roue de renvoi 6 et sur la périphérie 25 de laquelle sont à même de venir s'appliquer, par simple gravité, lesdites portions 23 des tapis de dépose 17. Sur cette périphérie 25 de la roue de freinage 24 étant appliqué un revêtement d'un certain coefficient d'adhérence pour assurer la traction souhaitée sur ces tapis de dépose 17.

Selon un premier mode de réalisation, cette roue de freinage 24 est fixe. Cependant pour éviter un freinage excessif, elle peut être soumise à une rotation de vitesse sensiblement plus faible à la vitesse de rotation de la roue de renvoi 6.

En fait, selon un mode d'exécution préférentiel, la roue de freinage 24 est définie de diamètre inférieur à ladite roue de renvoi 6 de manière à présenter une vitesse périphérique plus faible par rapport à cette dernière, différentiel de vitesse d'où résulte l'action de freinage recherchée au niveau des tapis de dépose 17 et, donc, leur mise sous tension.

Finalement, après dépose d'un produit P dans un tel godet 3 et lorsque celui-ci vient à s'éloigner de la roue de renvoi 6, la traction exercée par la roue de freinage 24 sur le tapis de dépose 17 cesse également de sorte que le produit P pénètre progressivement dans le fond 20 de ce godet 3. Dans tous les cas, l'action des moyens de traction 21 est annihilée lorsque celui-ci arrive à hauteur du pesage 26 définissant, substantiellement, les moyens de calibrage.

A noter, à ce propos, que dans la mesure où les godets 3 se suivent de manière relativement rapprochée, le tapis de dépose 17 d'un godet 3 qui suit peut venir se superposer au tapis de dépose 17 du godet 3 qui le précède au niveau de la roue de freinage 24. Il est donc important, lorsque intervient ce pesage 26, que ces tapis de dépose 17 soient à nouveau décalés les uns par rapport aux autres pour éviter qu'ils n'influent la pesée. Pour cela, sous le brin de transport supérieur 8, plus exactement sous les godets 3, en sortie de la roue de renvoi 6, en amont du dispositif 1, s'étend une rampe de décalage 27 sur laquelle viennent reposer ces tapis de dépose 17 en quittant la roue de freinage 24, cette rampe 27 produisant, sous l'effet d'une ou d'une succession de décrochements 28, le décalage précédemment évoqué.

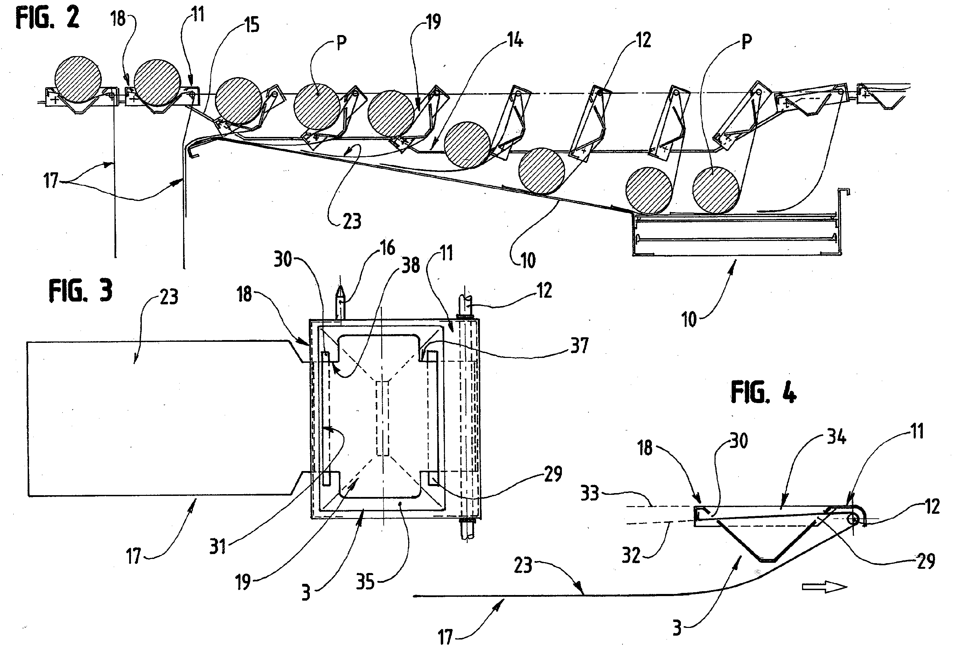

L'on remarquera, encore en se rapportant plus particulièrement dans les figures 3 et 4 correspondant au mode de réalisation où le tapis de dépose 17 s'étend, non pas depuis le bord transversal aval 11 en direction du bord transversal amont 18 du godet 3, mais, inversement depuis ce bord transversal amont 18 en direction du bord transversal aval 11, qu'avant de venir s'enrouler partiellement autour de l'axe de rotation 12 du godet 3 pour repartir en direction amont, dans sa portion 19 s'étendant au-dessus de ce godet 3, il traverse, une ouverture oblongue 29 ménagée, parallèlement, légèrement en-dessous dudit bord transversal aval 11 pour rejoindre le bord transversal amont 18 où, là encore, est ménagée, légèrement en contrebas, une autre ouverture oblongue 30 identique que vient traverser l'extrémité 31 de ce tapis de dépose 17 pour être fixée, par des moyens appropriés, au godet 3.

En somme, en position tendue la portion 19 de ce tapis de dépose 17 définit un plan sensiblement horizontal 32 de réception du produit P se situant à un niveau légèrement inférieur, en direction du fond 20 du godet 3, par rapport au plan 33 dans lequel s'inscrit le bord supérieur 34 de ce dernier. Cela permet de définir, en particulier pour cette réception du produit P, un rebord de retenue périphérique 35 évitant sa chute.

Au niveau de ces ouvertures oblongues 29, 30, le tapis de dépose 17 présente, évidemment, une largeur transversale ajustée en conséquence pour permettre son passage. En particulier, il peut présenter, à ce niveau, des étranglements 37, 38 définis de manière à permettre à ce tapis de dépose 17 de passer, dans sa portion 19 s'étendant au-dessus du godet 3, depuis une position tendue à une position détendue dans laquelle il laisse au produit P la possibilité de venir reposer dans le fond 20 du godet 3.

Il convient de remarquer que ce tapis de dépose 17 peut, de la même manière, traverser, au niveau de sa portion 19 s'étendant au-dessus d'un godet 3, des ouvertures oblongue 29, 30 en contre-bas des bords transversaux 11 et 18, ceci lorsque ce tapis emprunte une disposition inverse au mode de réalisation illustré sur les dessins, c'est à dire lorsqu'il vient s'étendre depuis le bord transversal aval 11 du godet 3 vers son bord transversal amont 18, comme cela a déjà été expliqué plus haut.

Tel que cela ressort de la description qui précède, la présente invention vient répondre, de manière avantageuse, au problème posé.

## Revendications

1. Dispositif (1) de calibrage et/ou triage de produits, tels que des fruits, comportant au moins une rangée (2) de godets (3) en forme d'une chaîne de transport (4) à circuit bouclé décrivant, entre deux roues de renvoi (6), un brin de transport horizontal supérieur (8) sous lequel s'étend au moins un convoyeur d'évacuation (9) réceptionnant les produits (P) calibrés, notamment au travers d'un profil de guidage (10), lesdits godets (3) étant montés pivotants autour d'un axe de rotation horizontal (12) défini sensiblement par leur bord transversal aval (11), par rapport au sens de défilement dudit brin de transport horizontal supérieur (8), pour déverser, après calibrage et sous l'impulsion de moyens de commande (14) appropriés, lesdits produits (P) sur le convoyeur d'évacuation (9) correspondant, au travers d'un tapis de dépose (17) que comporte, solidairement, chaque godet (3), **caractérisé par le fait qu'**un tapis de dépose (17) comporte une portion d'extrémité (19) venant s'étendre librement au-dessus du godet (3) correspondant, tandis que des moyens de traction (21) sont prévus aptes à mettre sous tension ledit tapis de dépose (17) au moins dans cette portion (19) s'étendant au-dessus du godet (3), lors de la dépose d'un produit (P) dans ce dernier.

2. Dispositif de calibrage et/ou triage selon la revendication 1, **caractérisé par le fait que** les moyens de traction (21) sont conçus aptes à intervenir sensiblement au niveau de l'alimentation des godets (3) en produits (P) à calibrer.

3. Dispositif de calibrage et/ou triage selon l'une quelconque des revendications 1 et 2, **caractérisé par le fait que** les moyens de traction (21) sont définis par une surface adhérente (22) sur laquelle vient reposer la portion (23) du tapis de dépose (17) retombant au-delà du godet (3), ceci avant l'arrivée de ce dernier à hauteur d'un dispositif d'alimentation (13) des godets (3) en produits (P) à calibrer.

4. Dispositif de calibrage et/ou triage selon la revendication 3, **caractérisé par le fait que** la surface adhérente (22) est définie par une roue de freinage (24) montée coaxialement à la roue de renvoi (6) en partie amont où se situe le dispositif d'alimentation (13), sur la périphérie (25) de cette roue de freinage (24) venant s'appliquer, par gravité, lesdites portions (23) des tapis de dépose (17).

5. Dispositif de calibrage et/ou triage selon la revendication 4, **caractérisé par le fait que** sur la périphérie (25) de la roue de freinage (24) est appliqué un revêtement dont le coefficient d'adhérence est déterminé pour assurer la traction souhaitée sur les tapis de dépose (17).

6. Dispositif de calibrage et/ou triage selon l'une quelconque des revendications 4 ou 5, **caractérisé par le fait que** la roue de freinage (24) est fixe.

7. Dispositif de calibrage et/ou triage selon l'une quelconque des revendications 4 ou 5, **caractérisé par le fait que** la roue de freinage (24) est soumise à une rotation de vitesse sensiblement plus faible à la vitesse de rotation de la roue de renvoi (6).

8. Dispositif de calibrage et/ou triage selon l'une quelconque des revendications 4 ou 5, **caractérisé par le fait que** la roue de freinage (24) est définie de diamètre inférieur à ladite roue de renvoi (6) de manière à présenter une vitesse périphérique plus faible par rapport à cette dernière, différentiel de vitesse d'où résulte l'action de freinage sur les tapis de dépose (17), donc leur mise sous tension.

9. Dispositif de calibrage et/ou triage selon l'une quelconque des revendications précédentes, **caractérisé par le fait que** sous les godets (3) du brin de transport supérieur (8), en sortie de la roue de renvoi (6), en amont du dispositif (1), s'étend une rampe de décalage (27) sur laquelle sont à même de venir reposer les tapis de dépose (17), cette rampe de décalage (27) comportant une ou une succession de décrochements (28) de manière à assurer un décalage entre les tapis de dépose (17) se succédant.

10. Dispositif de calibrage et/ou triage selon l'une quelconque des revendications précédentes, **caractérisé par le fait que** le tapis de dépose (17), de largeur adaptée à un godet (3), s'étend, sensiblement depuis le bord transversal aval (11) d'un tel godet (3), au-dessus de ce dernier pour venir retomber, librement, sensiblement au-delà de son bord transversal amont (18).

11. Dispositif de calibrage et/ou triage selon l'une quelconque des revendications 1 à 9, **caractérisé par le fait que** le tapis de dépose (17), de largeur adaptée à un godet (3), est attaché, par son extrémité (31), sensiblement au niveau du bord transversal amont (18) du godet (3) pour venir s'étendre au-dessus de celui-ci et retomber au-delà de son bord transversal aval (11) en venant se replier sous ce godet (3) en direction de la partie amont du dispositif (1), en sens contraire au défilement de la chaîne de transport (5).

12. Dispositif de calibrage et/ou triage selon la revendication 11, **caractérisé par le fait qu'**au-delà du bord transversal aval (11) du godet (3), le tapis de dépose (17) vient se replier sous ce dernier en venant s'enrouler partiellement autour de l'axe de rotation (12) de ce godet (3).

13. Dispositif de calibrage et/ou triage selon l'une quelconque des revendications 10 à 12, **caractérisé par le fait que** le tapis de dépose (17) traverse, de part et d'autre de sa portion (19) s'étendant au-dessus du godet (3), des ouvertures oblongues (29, 30) ménagées parallèlement légèrement au-dessous du bord transversal aval (11) et du bord transversal amont (18) de ce godet (3), de manière à définir un rebord de retenue périphérique (35) entre le plan de réception horizontal (32) correspondant à ladite portion (19) tendue de ce tapis de dépose (17) et le plan (33) dans lequel s'inscrit le bord supérieur (34) du godet (3).
